# EUROPÄISCHE PATENTSCHRIFT

(11) **EP 1 799 519 B1**
(45) Veröffentlichungstag und Bekanntmachung des Hinweises auf die Patenterteilung: **11.12.2013**
(21) Anmeldenummer: 05793511.6
(22) Anmeldetag: 05.10.2005
(51) Int. Cl.: B60T 1/06, B60T 8/32, F16D 65/12

(54) **VERFAHREN ZUR HERSTELLUNG EINER POLRAD/RADNABEN-VERBINDUNG UND DEREN ANORDNUNG**
METHOD FOR THE CREATION OF A POLE WHEEL/WHEEL HUB CONNECTION AND ARRANGEMENT THEREOF
PROCEDE ET AGENCEMENT POUR PRODUIRE UN ENSEMBLE ROTOR/MOYEU DE ROUE

(30) Priorität: 08.10.2004 DE 102004049355
(43) Veröffentlichungstag der Anmeldung: 27.06.2007
(73) Patentinhaber: KNORR-BREMSE Systeme für Nutzfahrzeuge GmbH, 80809 München (DE)
(72) Erfinder: PAHLE, Wolfgang, 83707 Bad Wiessee (DE); LEHNER, Thomas, 81677 München (DE); BAUMGARTNER, Johann, 85368 Moosburg (DE)
(74) Vertreter: Mattusch, Gundula
(86) Internationale Anmeldenummer: PCT/EP2005/010707
(87) Internationale Veröffentlichungsnummer: WO 2006/040051

(56) Entgegenhaltungen:
- EP-A- 0 507 339
- EP-A- 0 597 378
- DE-A1- 4 321 930
- DE-A1- 10 205 046
- DE-C1- 4 445 236
- US-A- 5 067 597

## Beschreibung

Die vorliegende Erfindung betrifft ein Verfahren zur Herstellung einer Polrad/Radnaben-Verbindung eines Kraftfahrzeuges und deren Anordnung.

Derartige Polräder kommen als Funktionsteile von Antiblockier-Systemen (ABS) an Kraftfahrzeugen zum Einsatz, wo sie üblicherweise im Anbindungsbereich einer Scheibenbremse an der zugeordneten Radnabe des Kraftfahrzeuges befestigt sind.

Die Scheibenbremse weist dabei eine mit der Radnabe verbundene Bremsscheibe auf, die zur Bremsung des Kraftfahrzeuges von Bremsbacken kontaktiert wird, durch deren an der Bremsscheibe anliegende Reibbeläge die Abbremsung erfolgt.

Neben der Bremsscheibe ist dabei das Polrad, das mit einem Sensor in Wirkverbindung steht, verdrehsicher an der Radnabe befestigt. Ein solches Polrad ist beispielsweise aus der DE 102 05 046 A1 bekannt.

Dabei ist das Polrad als Blechstanzteil mit der Radnabe durch Form- oder Reibschluss verbunden. Statt als Blechstanzteil kann das Polrad auch als Sinterteil ausgebildet sein. Bei anderen bekannten Lösungen werden im gleichen Winkelabstand zueinander stehende Zähne des Polrades aus der gegossenen Radnabe gießtechnisch oder zerspanend geformt, was jedoch mit einem erheblichen Fertigungsaufwand verbunden ist. Weiter ist es bekannt, durch Einlagerung von magnetischen Partikeln eine zugeordnete Radlagerdichtung in Verbindung mit aktiven Drehzahlsensoren als Polrad zu verwenden.

Aus der gattungsgemäßen US 5 067 597 A ist eine Polrad/Radnaben-Verbindung bekannt, bei der das als Gussteil hergestellte Polrad durch teilweises Umgießen mit der Schmelze einer zu gießenden Radnabe mitverbunden ist, wobei die Zahnlücken durch die Schmelze geschlossen sein können.

Bei frei liegenden Polrädern, die nicht vollkommen gegen äußere Einflüsse abgeschirmt sind, wie dies auch bei der Integration in die Radlagerdichtung der Fall ist, besteht die Gefahr der Korrosion und Verschmutzung, insbesondere der Spalte zwischen den einzelnen Zähnen, wobei die Spalten auch durch fensterförmige Durchbrechungen gebildet sein können.

Besonders bei Verschmutzungen durch metallische Bestandteile, wie sie beim Abrieb der Bremsscheibe und der Bremsbeläge entstehen, kann das Drehzahlsignal gestört werden oder ausfallen. Um dies zu verhindern ist schon versucht worden, das Polrad vollständig in Kunststoff einzubetten, was jedoch insofern nachteilig ist, als die beim Bremsen auftretenden Temperaturen den Kunststoff über Gebühr stark beanspruchen, so dass die Standzeit dieser Verbindungsart als den Anforderungen nicht entsprechend angesehen werden muss.

Neben der Verschmutzungsproblematik ist auch die bislang bekannte Art der Fixierung des Polrades am sich drehenden Fahrzeugteil als nachteilig anzusehen. Durch unterschiedliche Ausdehnungskoeffizienten und Wärmeleitungen kann es bei hohen Temperaturen, wie sie bei der genannten Bremsung entstehen, zum Versagen dieser Verbindung kommen, wenn diese durch eine Presspassung zwischen dem Polrad und dem sich drehenden Fahrzeugteil hergestellt ist. Es ist daher notwendig, einen zusätzlichen Formschluss vorzusehen, der nur mit einem entsprechend hohen Fertigungs- und Montageaufwand zu realisieren ist. Im übrigen ist ein hoher Montageaufwand auch für die anderen genannten Konfigurationen des Polrades charakteristisch, so dass sich insgesamt eine ungünstige Kostenstruktur ergibt.

Der vorliegenden Erfindung liegt daher die Aufgabe zugrunde, ein Verfahren zur Herstellung bzw. eine Anordnung einer Polrad/Radnaben-Verbindung zu entwickeln, durch das die Betriebssicherheit des Polrades verbessert und die Fertigungs-und Montagekosten gesenkt werden.

Diese Aufgabe wird durch ein Verfahren gelöst, das die Merkmale des Anspruchs 1 aufweist, bzw. durch eine Anordnung mit den Merkmalen des Anspruchs 4.

Durch die Erfindung wird eine Baueinheit Polrad/Radnabe geschaffen, die sich durch eine ganze Reihe von Vorteilen auszeichnet.

So ist zunächst einmal die gegenüber dem Stand der Technik wesentlich vereinfachte Montage zu nennen, da nur diese Baueinheit fahrzeugseitig befestigt werden muss. Verbindungsmittel, mit denen das Polrad an der Radnabe bisher befestigt wurde, sind nicht mehr erforderlich, ebenso wenig wie die dafür notwendigen baulichen Voraussetzungen.

Der Einfluss der beim Bremsen auftretenden Wärme auf die hinsichtlich ihrer Ausdehnungskoeffizienten und Wärmeleitungen unterschiedlichen Werkstoffe kann unberücksichtigt bleiben, da das Polrad in die Radnabe eingebettet ist und von daher sozusagen fest verankert ist.

Daneben ist auch die Fertigung der Baueinheit Polrad/Radnabe relativ einfach und mit geringem fertigungstechnischen Aufwand zu realisieren. Dabei ist im Bedarfsfall lediglich eine geringe spanende Bearbeitung erforderlich. Diese vor allem dann, wenn es bei den üblichen Materialdicken des Polrades von 2 bis 3 mm aufgrund der Gießtemperatur zu Verformungen des Polrades kommt. In diesem Fall kann die spanende Bearbeitung der Stirnfläche der Radnabe bei gleichzeitigem Freilegen der Polradverzahnung die vorhandene Verformung beseitigen.

Für eine problemlose Fertigung muss die Gießtemperatur erheblich unter der des Polrades liegen. Als Radnaben-Werkstoff bieten sich dabei Aluminiumlegierungen an, die mit einer Gießtemperatur von 700 bis 750° Celsius zu verarbeiten sind. In diesem Temperaturbereich besteht keine Gefahr einer Qualitätsminderung der Verzahnung des Polrades.

Eine weitere Anforderung an den Radnaben-Werkstoff besteht darin, dass dieser selbst nicht magnetisch leitend sein darf, während das Polrad zur Funktionsfähigkeit aus einem magnetisch leitenden Material, üblicherweise Stahl, besteht. Durch die genannte spanende Bearbeitung sowohl der Radnabe wie auch des Polrades wird letzteres freigelegt und ist damit korrosionsgefährdet den Witterungseinflüssen ausgesetzt. Zur Verhinderung der Korrosion besteht daher, nach einer vorteilhaften Weiterbildung der Erfindung, das Polrad aus einem nicht rostenden Stahl, der überdies magnetisch leitfähig sein muss. Hierzu eignen sich besonders martensitische und ferritische, jedoch keine austenitischen rostfreien Stähle.

Durch das Eingießen des Polrades in die Radnabe werden die Ausnehmungen bzw. Durchbrechungen zwischen den Zähnen durch den Werkstoff der Radnabe ausgefüllt und praktisch hermetisch verschlossen, so dass ein Eindringen von Verschmutzungen, insbesondere von die Funktionsfähigkeit des Polrades beeinträchtigenden Metallpartikel und wirksam verhindert ist. Insofern stellt die geschaffene Baueinheit eine erhebliche Verbesserung der Betriebssicherheit dar, zumal ein verschmutzungsbedingter Ausfall des Gesamtsystems praktisch ausgeschlossen ist.

Als besonders bemerkenswert ist auch die sich aus der Erfindung ergebende signifikante Erhöhung der Standzeit zu nennen, durch die eine Senkung der Betriebskosten gegeben ist, die in Addition mit den reduzierten Fertigungs- und Montagekosten zu einer außerordentlichen wirtschaftlichen Verbesserung führt.

Weitere vorteilhafte Ausbildungen der Erfindung sind in den Unteransprüchen gekennzeichnet.

Das erfindungsgemäße Verfahren sowie ein Ausführungsbeispiel einer Anordnung einer Polrad/Radnaben-Verbindung wird nachfolgend anhand der beigefügten Zeichnungen beschrieben.

Es zeigen:
- Figur 1: eine montierte Polrad/Radnaben-Verbindung in einer perspektivischen Ansicht
- Figur 2: einen Längsschnitt durch die Verbindung gemäß Figur 1
- Figur 3: eine vergrößerte Einzelheit der Verbindung, ebenfalls in einem Längsschnitt
- Figur 4: ein Polrad als Einzelheit dargestellt

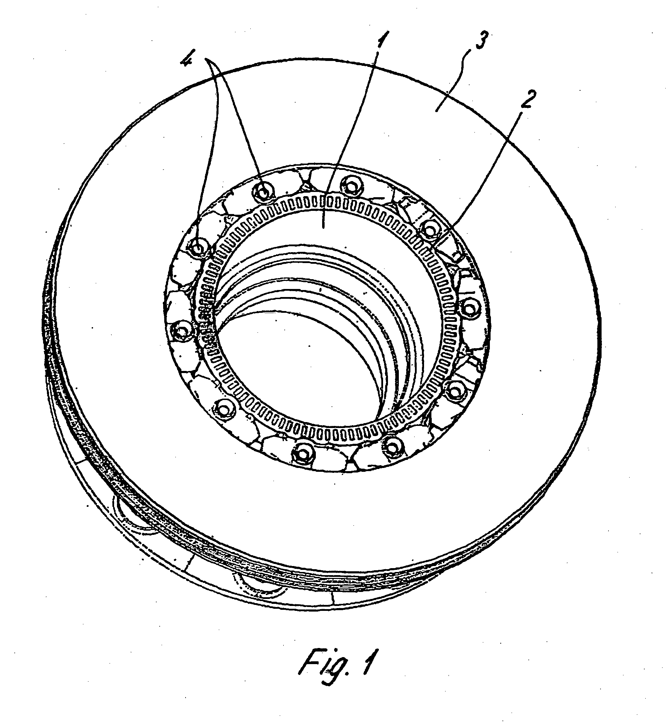

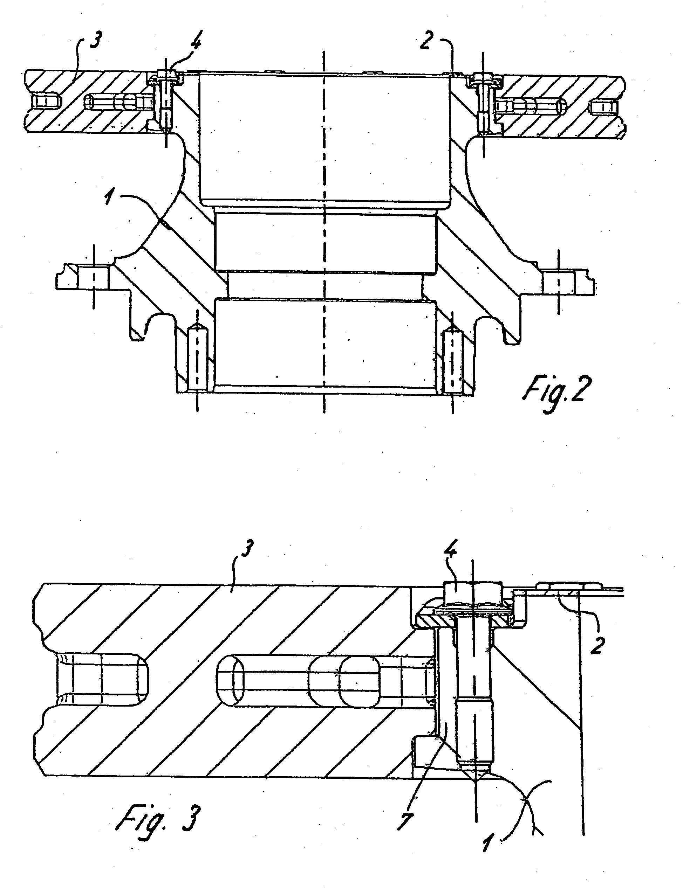

In den Figuren 1 bis 3 ist eine Anordnung einer Polrad/Radnaben-Verbindung eines Kraftfahrzeuges dargestellt, wobei das magnetisch leitfähige Polrad 2 mit einer Vielzahl in gleichem Winkelabstand zueinander angeordneten Durchbrechungen 5 versehen ist, zwischen denen jeweils ein Zahn 6 gebildet ist.

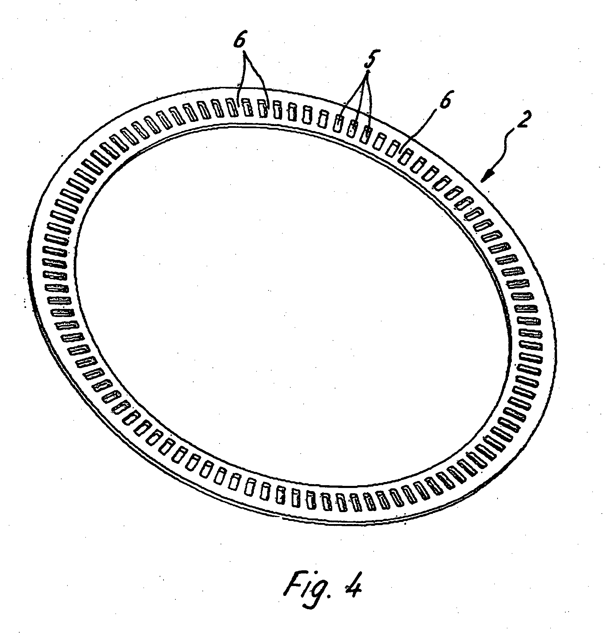

Wie insbesondere die Figur 4 sehr deutlich wiedergibt, ist das Polrad 2 als gestanztes, ringförmiges, flächiges Blechteil ausgebildet, bei dem sich die Durchbrechungen 5 und die Zähne 6 radial erstrecken.

In der Figur 1 ist die Polrad/Radnaben-Verbindung gezeigt, an die eine Bremsscheibe 3 über Schrauben 4 angeschlossen ist, wobei die Schrauben 4 in einen umfänglichen Kranz 7 der Radnabe 1 eingedreht sind.

Das Polrad 2 ist als vorgefertigtes Blechteil in die Radnabe 1 eingegossen, wozu das Blechteil in eine Gießform für die Radnabe 1 gelegt und danach die die Radnabe bildende, aus einem im Erstarrungszustand magnetisch nicht leitfähigen Werk-stoff bestehende Schmelze unter weitgehendem Formerhalt des Polrades 2 in die Gießform eingefüllt wird.

Dabei ist das Polrad 2 so positioniert, dass es im wesentlichen den der Bremsscheibe 3 zugewandten Stirnseitenbereich der Radnabe 1 bildet, wobei die Schmelze für die Radnabe 1 die Durchbrechungen 5 des Polrades 2 vollständig ausfüllt.

Um eventuell vorhandene Verformungen des Polrades zu beseitigen, die durch die Schmelzwärme beim Gießen der Radnabe 1 auf das Polrad einwirkt, kann die Polrad/Radnaben-Verbindung im Bereich der entsprechenden Stirnseite der Radnabe 1 spanend bearbeitetet werden, so dass sich eine plane Fläche ergibt.

Zur Minimierung der Verformungen ist als Werkstoff für die Radnabe 1 einer gegenüber dem aus einem nicht rostenden, martensitischen oder ferritischen, magnetisch leitfähigen Stahl bestehenden Polrad 2 mit geringerer Schmelztemperatur zu wählen, vorzugsweise eine Aluminiumlegierung, die magnetisch nicht leitend ist. Dadurch wird die im Zusammenspiel mit einem nicht dargestellten, mit dem Polrad 2 in Wirkverbindung stehenden Sensor eine durch den Wechsel zwischen Durchbrechungen 5 und Zähnen 6 erzeugte einwandfreie Impulsgebung für den Betrieb des Antiblockiersystems gewährleistet.

Durch den sicheren Verbund des Polrades 2 mit der Radnabe 1 sind die betriebsbedingten Einflüsse, beispielsweise durch beim Bremsen entstehenden Reibungswärme unwirksam.

### Bezugszeichenliste

- 1: Radnabe
- 2: Polrad
- 3: Bremsscheibe
- 4: Schraube
- 5: Durchbrechung
- 6: Zahn
- 7: Kranz

## Patentansprüche

1. Verfahren zur Herstellung einer Polrad/Radnaben-Verbindung eines Kraftfahrzeuges, **dadurch gekennzeichnet, dass** das magnetisch leitfähige, als Blechstanzteil vorgefertigte Polrad (2) in eine Gießform für die Radnabe (1) gelegt und danach die die Radnabe (1) bildende, aus einem im Erstarrungszustand magnetisch nicht leitfähigen Werkstoff bestehende Schmelze unter weitgehendem Formerhalt des Polrades (2) eingefüllt wird, wobei zwischen Zähnen (6) des Polrades (2) gebildete fensterförmige Durchbrechungen (5) durch die Schmelze ausgefüllt werden.

2. Verfahren nach Anspruch 1, **dadurch gekennzeichnet, dass** das vorgefertigte Polrad (2) in den Bereich der Gießform eingelegt wird, der eine Stirnseite der fertigen Radnabe (1) bildet.

3. Verfahren nach Anspruch 1 oder 2, **dadurch gekennzeichnet, dass** die Stirnseite der Radnabe (1) sowie das darin eingebetete Polrad (2), dessen Zähne (6) bzw. Durchbrechungen (5) sich radial erstrecken, zu einer planen Fläche spanend bearbeitet werden.

4. Anordnung einer Polrad/Radnaben-Verbindung eines Kraftfahrzeuges, wobei das magnetisch leitfähige Polrad (2) mit einer Vielzahl, in gleichem Winkelabstand zueinander angeordneten Zähnen (6) versehen ist, **dadurch gekennzeichnet, dass** das Polrad (2) als vorgefertigtes Blechteil in die Radnabe (1) eingegossen ist und dass die zwischen den Zähnen (6) gebildeten fensterför-migen Durchbrechungen (5) des Polrades (2) durch Werkstoff der Radnabe (1) ausgefüllt sind.

5. Anordnung nach Anspruch 4, **dadurch gekennzeichnet, dass** das Polrad (2) als ein planer Ring ausgebildet ist.

6. Anordnung nach Anspruch 4 oder 5, **dadurch gekennzeichnet, dass** die Radnabe (1) aus einem Werkstoff gegossen ist, dessen Gießtemperatur niedriger ist als die des Polrades (2).

7. Anordnung nach einem der Ansprüche 4 bis 6, **dadurch gekennzeichnet, dass** die Radnabe (1) aus einem Werkstoff gegossen ist, dessen Gießtemperatur etwa 700 bis 750° Celsius ist.

8. Anordnung nach einem der Ansprüche 4 bis 7, **dadurch gekennzeichnet, dass** die Radnabe (1) aus einem magnetisch nicht leitenden Werkstoff besteht.

9. Anordnung nach einem der Ansprüche 4 bis 8, **dadurch gekennzeichnet, dass** die Radnabe (1) aus einer Aluminiumlegierung besteht.

10. Anordnung nach einem der Ansprüche 4 bis 9, **dadurch gekennzeichnet, dass** das Polrad aus einem nicht rostenden Stahl besteht.

11. Anordnung nach einem der vorhergehenden Ansprüche 4 bis 10, **dadurch gekennzeichnet, dass** das Polrad (2) aus einem martensitischen oder ferritischen rostfreiem Stahl besteht.

## Claims

1. A method for the creation of a pole wheel/wheel hub connection of a motor vehicle, **characterised in that** the magnetically permeable pole wheel (2), prefabricated as a punched sheet metal part, is placed in a mould for the wheel hub (1), and the melt which forms the wheel hub (1) and is composed of a magnetically impermeable material in the solidification state is then filled in while the shape of the pole wheel (2) is largely maintained, wherein window-like apertures (5) formed between teeth (6) of the pole wheel (2) are filled by the melt.

2. The method as claimed in claim 1, **characterised in that** the prefabricated pole wheel (2) is inserted into the region of the mould which forms an end face of the finished wheel hub (1).

3. The method as claimed in claim 1 or 2, **characterised in that** the end face of the wheel hub (1) and the pole wheel (2) which is embedded in said wheel hub, the teeth (6) and the apertures (5) of which pole wheel extend radially, are machined to form a planar surface.

4. An arrangement of a pole wheel/wheel hub connection of a motor vehicle, with the magnetically permeable pole wheel (2) being provided with a large number of teeth (6) which are arranged at the same angular distance from one another, **characterised in that** the pole wheel (2) is integrally cast into the wheel hub (1) as a prefabricated sheet metal part, and the window-like apertures (5) of the pole wheel (2) formed between the teeth (6) are filled by material of the wheel hub (1).

5. The arrangement as claimed in claim 4, **characterised in that** the pole wheel (2) is in the form of a planar ring.

6. The arrangement as claimed in claim 4 or 5, **characterised in that** the wheel hub (1) is cast from a material whose casting temperature is lower than that of the pole wheel (2).

7. The arrangement as claimed in one of claims 4 to 6, **characterised in that** the wheel hub (1) is cast from a material whose casting temperature is approximately 700 to 750° Celsius.

8. The arrangement as claimed in one of claims 4 to 7, **characterised in that** the wheel hub (1) is composed of a magnetically impermeable material.

9. The arrangement as claimed in one of claims 4 to 8, **characterised in that** the wheel hub (1) is composed of an aluminium alloy.

10. The arrangement as claimed in one of claims 4 to 9, **characterised in that** the pole wheel is composed of a stainless steel.

11. The arrangement as claimed in one of the preceding claims 4 to 10, **characterised in that** the pole wheel (2) is composed of a martensitic or ferritic stainless steel.

## Revendications

1. Procédé à créer une connexion roue polaire (moyeu de roue d'un véhicule automobile, **caractérisé en ce que** ladite roue polaire (2) à conduction magnétique, qui est préfabriquée en tant qu'une pièce découpée en tôle, est posée dans une moule pour ledit moyeu de roue (1) et qu'ensuite la masse fondue, qui constitue ledit moyeu de roue (1) et consiste en un matériau sans conduction magnétique en état de solidification, est rempli, en gardant largement la forme de ladite roue polaire (2), aux trous traversant (5) en fenêtre, formés entre lesdites dents (6) de ladite roue polaire (2), étant remplis par la masse fondue.

2. Procédé selon la revendication 1, **caractérisé en ce que** ladite roue polaire (2) préfabriquée est posé dans cette zone de ladite moule, qui constitue un côté de face du moyeu de roue fini (1).

3. Procédé selon la revendication 1 ou 2, **caractérisé en ce que** ledit côté de face dudit moyeu de roue (1) ainsi que ladite roue polaire (2) y noyée, dont les dents (6) ou respectivement trous traversant (5) s'étendent en sens radial, sont usinés par enlèvement de copeaux afin de créer une surface planaire.

4. Arrangement d'une connexion roue polaire/moyeu de roue d'un véhicule automobile, dans lequel ladite roue polaire à conduction magnétique (2) est pourvue d'une pluralité de dents (6) disposées aux écarts angulaires égaux l'une relativement à l'autre, **caractérisé en ce que** ladite roue polaire (2) est noyée en tant que pièce en tôle préfabriquée dans ledit moyeu de roue (1) et **en ce que** lesdits trous traversant en fenêtre de ladite roue polaire (2), qui sont formés entre lesdites dents (6), sont remplis par le matériau dudit moyeu de roue (1).

5. Arrangement selon la revendication 4, **caractérisé en ce que** ladite roue polaire (2) est configurée sous forme d'un anneau planaire.

6. Arrangement selon la revendication 4 ou 5 **caractérisé en ce que** ledit moyeu de roue (1) est coulé en un matériau dont la température de coulée est plus bas que celle de ladite roue polaire (2).

7. Arrangement selon une quelconque des revendications 4 à 6, **caractérisé en ce que** ledit moyeu de roue (1) est coulé en un matériau dont la température de coulée est 700 à 750 °C environ.

8. Arrangement selon une quelconque des revendications 4 à 7, **caractérisé en ce que** ledit moyeu de roue (1) est fait en un matériau sans conduction magnétique.

9. Arrangement selon une quelconque des revendications 4 à 8, **caractérisé en ce que** ledit moyeu de roue (1) consiste en un alliage d'aluminium.

10. Arrangement selon une quelconque des revendications 4 à 9, **caractérisé en ce que** ladite roue polaire consiste en un acier inoxydable.

11. Arrangement selon une quelconque des revendications 4 à 10, **caractérisé en ce que** ladite roue polaire (2) consiste en un acier martensitique ou ferritique inoxydable.
